# EUROPEAN PATENT APPLICATION

(11) **EP 4 567 988 A1**
(43) Date of publication of application: **11.06.2025**
(21) Application number: 22954764.1
(22) Date of filing: 11.10.2022
(51) Int. Cl.: H01M 50/244, H01M 50/209

(54) **CONTAINER-TYPE ENERGY STORAGE SYSTEM**

(30) Priority: 10.08.2022 CN 202222097612 U
(71) Applicant: Eve Power Co., Ltd., Jingmen, Hubei 448000 (CN)
(72) Inventor: XIANG, Jian, Hubei 448000 (CN); ZHU, Zhonghuai, Hubei 448000 (CN); GONG, Muhong, Hubei 448000 (CN); LEI, Guijie, Hubei 448000 (CN); MA, Shuzhu, Hubei 448000 (CN)
(74) Representative: Berggren Oy
(86) International application number: PCT/CN2022/124530
(87) International publication number: WO 2024/031820

(57) **Abstract**

A container-type energy storage system is provided. The container-type energy storage system includes: a container (1), provided with a plurality of first compartment doors (5); a battery compartment (2), defined in the container (1); a plurality of battery clusters (4) are provided in the battery compartment (2), and the plurality of battery clusters (4) are in one-to-one correspondence the plurality of first compartment doors (5).

## Description

This application claims the priority to and benefit of Chinese Patent Application No. 202222097612.X, filed with China Patent Office on August 10, 2022, the entire contents of which is incorporated herein by reference.

### TECHNICAL FIELD

This application relates to the technical field of energy storage systems, for example, to a container-type energy storage system.

### BACKGROUND

Existing energy storage systems are usually based on internal maintenance, that is, a maintenance channel is pre-defined inside the container to facilitate maintenance personnel to enter the maintenance channel to maintain the energy storage equipment or energy storage system in the container.

However, since the maintenance channel is arranged inside the container, it will occupy part of the space inside the container, resulting in a low overall energy density of the container. On another hand, due to the limited internal space of the container, the maintenance channel is relatively small, which is not convenient for the entry of large maintenance equipment, and is not conducive to the smooth progress of maintenance work. Since the lithium-ion batteries in the energy storage equipment or in energy storage system are chemically instable, they will cause certain dangers to maintenance personnel when performing internal maintenance, resulting in a low safety of maintenance work.

### SUMMARY

The present application proposes a container-type energy storage system, which allows a larger space for use inside the container, and is conducive to the smooth progress of maintenance work and can improve the safety of maintenance work.

The present application provides a container-type energy storage system, comprising:
a container, provided with a plurality of first compartment doors;
a battery compartment, defined in the container, wherein a plurality of battery clusters are provided in the battery compartment, and the plurality of battery clusters are in one-to-one correspondence with the plurality of first compartment doors.

### BRIEF DESCRIPTION OF THE DRAWINGS

FIG. 1 is a top view of the container-type energy storage system according to the present application;
FIG. 2 is a front view of the container-type energy storage system according to the present application;
FIG. 3 is a partially exploded view of the battery support according to the present application; and
FIG. 4 is a structural schematic diagram of the intermediate frame according to the present application.

### Reference Numerals:

1, container; 2, battery compartment; 3, equipment compartment; 4, battery cluster; 41, battery support; 411, bottom frame; 4111, first support frame; 4112, foot; 412, top frame; 4121, third support frame; 4122, cover plate; 413, intermediate frame; 4131, second support frame; 4132, snap-fitting member; 414, mounting hole; 42, battery module; 5, first compartment door; 6, second compartment door; 7, clustering module; 8, power distribution module; 9, liquid cooling module; 10, fire control module.

### DETAILED DESCRIPTION OF THE EMBODIMENTS

All features, or steps in all methods or processes disclosed in this specification, except for mutually exclusive features and/or steps, can be combined in any way.

Any feature disclosed in this specification, unless otherwise stated, can be replaced by other equivalent or alternative features with similar purposes. That is, unless otherwise stated, each feature is only an example of a series of equivalent or similar features. Throughout the specification, the same reference numerals indicate the same elements.

In order to make the technical problems solved by the present application, the technical solutions adopted and the technical effects achieved clearer, the technical solutions of the present application are further explained in conjunction with the accompanying drawings and through specific embodiments.

In this embodiment, a container-type energy storage system is proposed, which allows a larger space for use inside the container, and is conducive to the smooth progress of maintenance work and can improve the safety of maintenance work. The container-type energy storage system in this embodiment is based on liquid cooling. In other embodiments, the container-type energy storage system may be based on air cooling or other cooling ways, and the specific cooling way of the container-type energy storage system is not limited here.

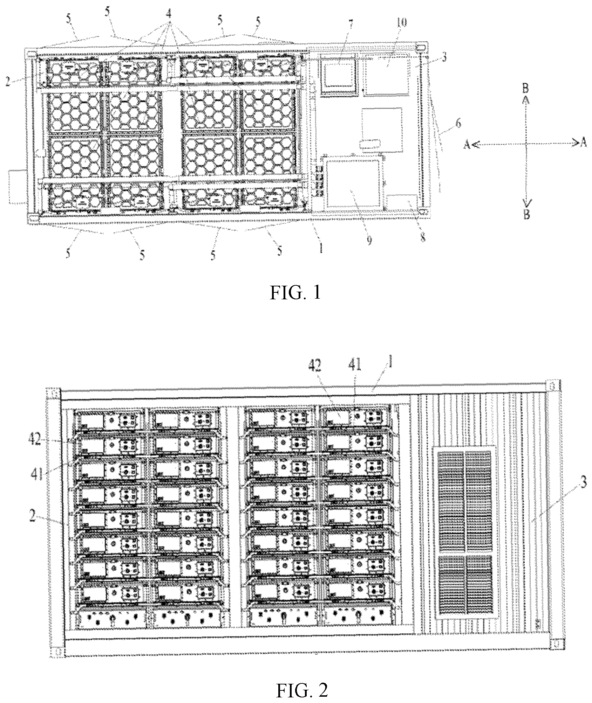

For example, as shown in FIG. 1, the container-type energy storage system includes a container 1 and a battery compartment 2. A plurality of first compartment doors 5 are provided on the container 1. The battery compartment 2 is defined in the container 1. A plurality of battery clusters 4 are arranged in the battery compartment 2 so that the battery clusters 4 are in one-to-one correspondence with the first compartment doors 5.

The battery compartment 2 is defined in the container 1, the plurality of battery clusters 4 are arranged in the battery compartment 2, and the plurality of first compartment doors 5 are provided on the container 1, and the battery clusters 4 is arranged in one-to-one correspondence with the first compartment doors 5. Therefore, when the battery clusters 4 are to be maintained, each of the battery clusters 4 can be maintained after the first compartment door 5 corresponding to the battery cluster 4 is opened. In this way, an external maintenance is applied, and the internal maintenance in the related art is no longer applied. That is to say, there is no need to define a maintenance channel inside the container 1, so that the space for use inside the container 1 can be larger, thereby improving the overall energy density of the container 1, and it is convenient for large maintenance equipment to enter the first compartment door 5 for maintenance, which is conducive to the smooth progress of maintenance work. Since the external maintenance is applied, the maintenance personnel do not need to enter the interior of the container 1, so as to avoid the problem that the battery cluster 4 has a certain danger to the maintenance personnel performing internal maintenance due to the chemical instability of the battery clusters 4. When there is a problem with the battery clusters 4, the maintenance personnel can immediately be evacuated from the container 1 to a safe place, thereby making the maintenance work safer.

For example, the plurality of battery clusters 4 are arranged side by side in the battery compartment 2, and each first compartment door 5 is arranged on either of the sides of the container 1 in a first direction at a position directly facing the corresponding battery cluster 4, so that the first compartment doors 5 can be opened from one side or both sides of the container 1. Therefore, the operation of opening the first compartment doors 5 is relatively simple and convenient. The first direction is parallel to the length direction of the container 1, and the first direction can be shown by arrow A in FIG. 1.

For example, as shown in FIG. 1, the container-type energy storage system also includes an equipment compartment 3. The battery compartment 2 and the equipment compartment 3 are arranged side by side in the container 1, and a second compartment door 6 is arranged on a side of the container 1 corresponding to the equipment compartment 3. The second compartment door 6 is arranged on the side of the container 1 in a second direction at a position directly facing the equipment compartment 3. The second direction is parallel to the width direction of the container 1, and the second direction can be shown by arrow B in FIG. 1.

The second compartment door 6 is arranged on the side of the container 1 in the second direction at a position directly facing the equipment compartment 3. Therefore, when the parts in the equipment compartment 3 are to be maintained, the parts in the equipment compartment 3 can be maintained after opening the second compartment door 6 without the maintenance personnel entering the interior of the container 1. In this way, an external maintenance is applied, and the internal maintenance in the related art is no longer applied. That is to say, there is no need to set a maintenance channel inside the container 1, so that the space for use inside the container 1 can be larger, thereby better improving the overall energy density of the container 1. Since the second compartment door 6 can provide a larger maintenance space, it is convenient for large maintenance equipment to enter the second compartment door 6 for maintenance, which is conducive to the smooth progress of maintenance work.

For example, the first compartment doors 5 and the second compartment door 6 are both outward-opening doors, so that when the first compartment doors 5 and the second compartment door 6 are opened from the outside, the first compartment doors 5 and the second compartment door 6 will not occupy the internal space of the container 1, and thus the space for use inside the container 1 is larger. In other embodiments, the first compartment doors 5 and/or the second compartment door 6 may be inward-opening doors.

For example, a flame retardant is provided between the battery compartment 2 and the equipment compartment 3, and the flame retardant extends along the second direction so that the ends thereof abuts against the inner walls of the container 1. As a result, the battery compartment 2 and the equipment compartment 3 can be completely isolated. The flame retardant in this embodiment may be a flame retardant plastic. In other embodiments, the flame retardant may be made of other flame retardant materials. The specific material of the flame retardant is not limited here, as long as the flame retardant can meet the flame retardant requirements.

By providing a flame retardant to completely isolate the battery compartment 2 from the equipment compartment 3, the battery compartment 2 and the equipment compartment 3 do not affect each other. As a result, the various parts in the battery compartment 2 and the equipment compartment 3 will not affect each other during the working process, so that the battery compartment 2 and the equipment compartment 3 are better independent from each other. On another hand, when one of the compartments is in maintenance, it will not affect the other compartment, so as to better protect the safety of the maintenance personnel, and make the maintenance work safer.

For example, as shown in FIGs. 1 and 2, each battery cluster 4 includes a battery support 41 and a plurality of battery modules 42. The plurality of battery modules 42 are sequentially placed on the battery support 41 in the vertical direction. The plurality of battery modules 42 are sequentially connected in series to form battery branches configured to work to realize the energy storage function of the container-type energy storage system. The battery modules 42 in this embodiment may be lithium-ion battery modules.

For example, a plurality of battery management modules are arranged in the equipment compartment 3. The battery management modules are in one-to-one correspondence with the battery branches. The battery management modules are connected to the corresponding battery branches by cables for signal transmission, so that the battery branches can be managed. As shown in FIG. 1, a clustering module 7, a power distribution module 8, a liquid cooling module 9 and a fire control module 10 are arranged in the equipment compartment 3 to realize other functions of the container-type energy storage system. The battery management module, the clustering module 7, the power distribution module 8, the liquid cooling module 9 and the fire control module 10 in this embodiment are all common modules in the energy storage system in the relevant technology, and the specific structure and working principle of each module are not described in detail here.

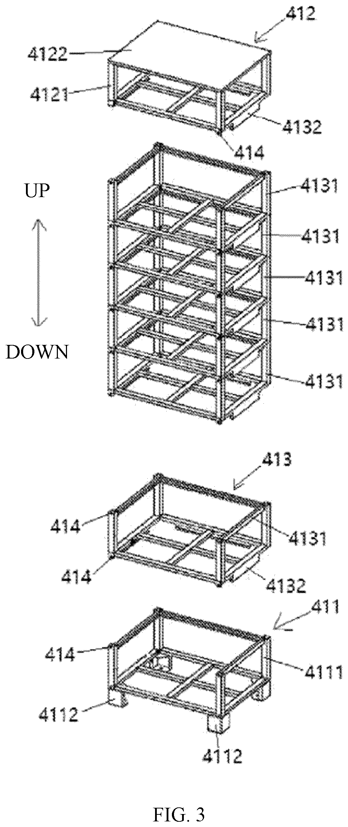

For example, as shown in FIGs. 2 and 3, each battery support 41 includes a bottom frame 411, a top frame 412, and a plurality of intermediate frames 413. The bottom frame 411, the plurality of intermediate frames 413, and the top frame 412 are connected in sequence vertically upward to form a complete battery support 41. The bottom frame 411, the plurality of intermediate frames 413, and the top frame 412 are detachably connected to each other, so that the battery support 41 can be disassembled and reassembled, so that a number of the intermediate frames 413 corresponding to the specific number of battery modules 42 to be placed can be installed. The up and down directions involved in this embodiment are shown by the arrows in FIG. 3.

For example, as shown in FIG. 3, the bottom frame 411 includes a first support frame 4111 and a plurality of feet 4112. The first support frame 4111 is configured to receive the corresponding battery module 42. The plurality of feet 4112 are evenly arranged at the bottom end of the first support frame 4111 to support the first support frame 4111. In this embodiment, there are four feet 4112, which are respectively disposed at four corners of the first support frame 4111.

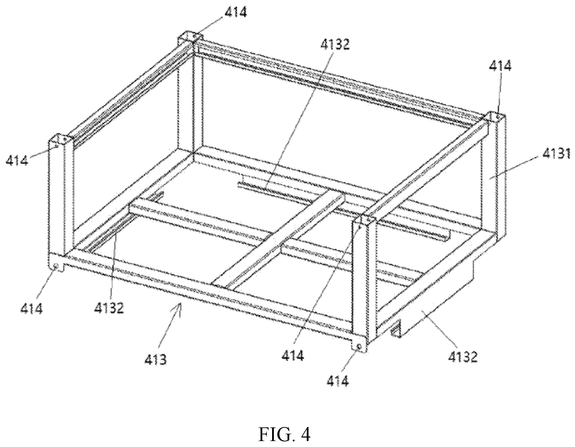

For example, as shown in FIGs. 3 and 4, each intermediate frame 413 includes a second support frame 4131 and fasteners. The second support frame 4131 is configured to receive the corresponding battery module 42. A plurality of snap-fitting members 4132 are arranged at the bottom of the second support frame 4131 for snapping into the first support frame 4111 located under and adjacent to the second support frame 4131 or snapping into another second support frame 4131 located under and adjacent to the second support frame 4131, so as to position the second support frame 4131 to the adjacent first support frame 4111 or position the two adjacent second support frames 4131. The fasteners are configured to fixedly connect the second support frame 4131 to the adjacent first support frame 4111, or to fixedly connect the two adjacent second support frames 4131, so as to fixedly connect the bottom frame 411 to the adjacent intermediate frame 413 or fixedly connect the two adjacent intermediate frames 413. As a result, the battery module 42 is located in the gap space formed between the second support frame 4131 and the adjacent first support frame 4111, or the battery module 42 is located in the gap space formed between the two adjacent second support frames 4131.

As shown in FIG. 3, mounting holes 414 are provided at the top of the first support frame 4111 and the top and bottom of each second support frame 4131. Each fastener passes through the corresponding mounting hole 414 to fixedly connect the first support frame 4111 to the adjacent second support frame 4131 or fixedly connect two adjacent second support frames 4131. In this embodiment, the fasteners may be screws.

For example, as shown in FIG. 3, the top frame 412 includes a third support frame 4121 and a cover plate 4122. The third support frame 4121 is configured to receive the corresponding battery module 42. The cover plate 4122 is arranged at the top of the third support frame 4121 so that the battery module 42 is located in the gap space formed between the third support frame 4121 and the cover plate 4122. The snap-fitting member 4132 is also arranged at the bottom of the third support frame 4121 for snapping into the second support frame 4131 located under and adjacent to the third support frame 4121 to position the third support frame 4121 and the adjacent second support frame 4131. The third support frame 4121 and the adjacent second support frame 4131 are fixedly connected by the fasteners.

As shown in FIG. 3, the mounting holes 414 are also defined at the bottom of the third support frame 4121, and the fasteners pass through the mounting holes 414 to fixedly connect the third support frame 4121 with the adjacent second support frame 4131, so that the corresponding battery module 42 can be located in the gap space formed by the third support frame 4121 and the second support frame 4131.

For example, the first support frame 4111, the second support frames 4131 and the third support frame 4121 have the same structure. In other embodiments, the first support frame 4111, the second support frames 4131 and the third support frame 4121 may have different structures.

## Claims

1. A container-type energy storage system, comprising:
a container (1), provided with a plurality of first compartment doors (5);
a battery compartment (2), defined in the container (1), wherein a plurality of battery clusters (4) are provided in the battery compartment (2), and the plurality of battery clusters (4) are in one-to-one correspondence with the plurality of first compartment doors (5).

2. The container-type energy storage system according to claim 1, wherein the plurality of the battery clusters (4) are arranged side by side in the battery compartment (2), and each of the plurality of first compartment doors (5) is arranged on either of sides of the container (1) in a first direction at a position directly facing a corresponding one of the plurality of battery clusters (4); the first direction is parallel to a length direction of the container (1).

3. The container-type energy storage system according to claim 2, further comprising an equipment compartment (3), wherein the battery compartment (2) and the equipment compartment (3) are arranged side by side in the container (1), and a second compartment door (6) is provided on a side of the container (1) corresponding to the equipment compartment (3).

4. The container-type energy storage system according to claim 3, wherein the second compartment door (6) is arranged on the side of the container (1) in the second direction at a position directly facing the equipment compartment (3); the second direction is parallel to a width direction of the container (1).

5. The container-type energy storage system according to claim 4, wherein a flame retardant is arranged between the battery compartment (2) and the equipment compartment (3).

6. The container-type energy storage system according to claim 5, wherein the flame retardant extends along the second direction so that ends of the flame retardant abuts against inner walls of the container (1).

7. The container-type energy storage system according to claim 3, wherein each of the battery clusters (4) comprises:
a battery support (41) and a plurality of battery modules (42), wherein the plurality of battery modules (42) are sequentially placed on the battery support (41) in a vertical direction, and the plurality of battery modules (42) are sequentially connected in series to form a plurality of battery branches.

8. The container-type energy storage system according to claim 7, wherein a plurality of battery management modules are arranged in the equipment compartment (3), the plurality of battery management modules are in one-to-one correspondence with the plurality of battery branches, and each of the plurality of battery management modules is electrically connected to a corresponding one of the plurality of battery branches.

9. The container-type energy storage system according to claim 7, wherein the battery support (41) comprises a bottom frame (411), a top frame (412) and a plurality of intermediate frames (413), wherein the bottom frame (411), the plurality of intermediate frames (413) and the top frame (412) are sequentially detachably connected along the vertical direction.

10. The container-type energy storage system according to claim 9, wherein the bottom frame (411) comprises:
a first support frame (4111), configured to receive a corresponding one of the plurality of battery modules (42); and
a plurality of feet (4112), arranged at a bottom of the first support frame (4111) to support the first support frame (4111).

11. The container-type energy storage system according to claim 10, wherein each of the plurality of intermediate frames (413) comprises:
a second support frame (4131), configured to receive a corresponding one of the plurality of battery modules (42), wherein a plurality of snap-fitting members (4132) are provided at a bottom of the second support frame (4131) to snap into the first support frame (4111) under and adjacent to the second support frame (4131) or snap into one of the second support frames (4131) of the plurality of intermediate frames (413) located under and adjacent to the second support frame (4131); and
fasteners, configured to fixedly connect the first support frame (4111) to an adjacent one of the second support frames (4131) of the plurality of intermediate frames (413), or to fixedly connect two adjacent ones of the second support frames (4131) of the plurality of intermediate frames (413).

12. The container-type energy storage system according to claim 11, wherein the top frame (412) comprises:
a third support frame (4121) and a cover plate (4122), wherein the third support frame (4121) is configured to receive a corresponding one of the plurality of battery modules (42), the cover plate (4122) is disposed at a top of the third support frame (4121), and a plurality of snap-fitting members are provided at a bottom of the third support frame (4121) to snap into the second support frame (4131) located under and adjacent to the third support frame (4121), and the third support frame (4121) is fixedly connected to the adjacent second support frame (4131) by fasteners.

13. The container-type energy storage system according to claim 3, wherein a clustering module (7), a power distribution module (8), a liquid cooling module (9) and a fire control module (10) are provided in the equipment compartment (3).

14. The container-type energy storage system according to claim 4, wherein a clustering module (7), a power distribution module (8), a liquid cooling module (9) and a fire control module (10) are provided in the equipment compartment (3).

15. The container-type energy storage system according to claim 5, wherein a clustering module (7), a power distribution module (8), a liquid cooling module (9) and a fire control module (10) are provided in the equipment compartment (3).

16. The container-type energy storage system according to claim 6, wherein a clustering module (7), a power distribution module (8), a liquid cooling module (9) and a fire control module (10) are provided in the equipment compartment (3).

17. The container-type energy storage system according to claim 7, wherein a clustering module (7), a power distribution module (8), a liquid cooling module (9) and a fire control module (10) are provided in the equipment compartment (3).

18. The container-type energy storage system according to claim 8, wherein a clustering module (7), a power distribution module (8), a liquid cooling module (9) and a fire control module (10) are provided in the equipment compartment (3).

19. The container-type energy storage system according to claim 9, wherein a clustering module (7), a power distribution module (8), a liquid cooling module (9) and a fire control module (10) are provided in the equipment compartment (3).

20. The container-type energy storage system according to claim 10, wherein a clustering module (7), a power distribution module (8), a liquid cooling module (9) and a fire control module (10) are provided in the equipment compartment (3).
